# EUROPEAN PATENT APPLICATION

(11) **EP 4 635 757 A1**
(43) Date of publication of application: **22.10.2025**
(21) Application number: 23903021.6
(22) Date of filing: 22.08.2023
(51) Int. Cl.: B60C 13/00, B60C 19/00

(54) **TIRE**

(30) Priority: 12.12.2022 JP 2022198223
(71) Applicant: BRIDGESTONE CORPORATION, Chuo-ku Tokyo 104-8340 (JP)
(72) Inventor: KAMADA Takehito, Tokyo 104-8340 (JP); ITO Yujiro, Tokyo 104-8340 (JP); HOSHINO Hironori, Tokyo 104-8340 (JP)
(74) Representative: Marks & Clerk LLP
(86) International application number: PCT/JP2023/030206
(87) International publication number: WO 2024/127716

(57) **Abstract**

Provided is a tire with an electronic tag that is protected from external stimuli. The tire, comprises: a tire body formed of rubber; an electronic tag arranged in a sidewall portion of the tire body; and a cover arranged on an outer surface of the sidewall portion in a width direction of the tire body, wherein when viewed from an outer side along the width direction, the cover covers the electronic tag.

## Description

### TECHNICAL FIELD

This disclosure relates to a tire.

### BACKGROUND

For example, there is a passive radio frequency identification transponder (hereinafter, referred to as a "transponder") as a non-contact information recording and playback device that can write and read information using radio waves. In some cases, tires are managed by attaching the transponder to the tires and writing or reading information about the tires into the transponder (see, for example, Patent Document 1). The transponder or its functions are realized by devices called electronic tags, IC tags, RF tags, RFID tags, etc.

Patent Document 1 discloses a pneumatic tire in which an electronic component (an example of the electronic tag) covered with a coating rubber is embedded therein. In this tire, an example of the electronic component is an RFID tag.

Patent Document 2 discloses an installation structure for an RFID tag (an example of the electronic tag) on a tire. In this installation structure, an RFID tag and a detection coil electromagnetically coupled to the antenna coil of the RFID tag are provided inside the tire, and a loop antenna is provided along the circumferential direction of the tire, so that the detection coil and the loop antenna form a series circuit. In the installation structure in this disclosure, the loop antenna is embedded along the inside or inner circumferential part of the tire, or is attached and fixed by adhesive or the like along the inside or inner circumferential surface.

### CITATION LIST

### Patent Literature

PTL 1: JP 2017-222294 A
PTL 2: JP 2002-264617 A

### SUMMARY

### (Technical Problem)

Tires are subject to various external stimuli when in use. Examples of the external stimuli to tires include external forces applied when stones or other objects come into contact with or collide with the tires, heat from temperature and sunlight, dirt such as soil, mud or sand (in particular, mud or sand containing oil, so-called oil sand or tar sand), and the deterioration associated with these forces, heat and dirt. However, in the case of tires and installation structures, as described in Patent Documents 1 and 2, there were cases where the electronic tags were not sufficiently protected against these stimuli. In other words, in the case of conventional tires, there were cases where the electronic tag was not sufficiently protected against external stimuli. As a result, for example, there were cases where it was not possible to manage tires using electronic tags throughout the entire tire lifecycle, from the time of tire manufacturing and sales to disposal. Therefore, it is desirable to provide a tire with an electronic tag that is protected from external stimuli.

This disclosure was made in light of this situation, and its object is to provide a tire with an electronic tag that is protected from external stimuli.

### (Solution to Problem)

In order to achieve the above object, the tire according to the present disclosure comprises:
a tire body formed of rubber;
an electronic tag arranged in a sidewall portion of the tire body; and
a cover arranged on an outer surface of the sidewall portion in a width direction of the tire body, wherein
when viewed from an outer side along the width direction, the cover covers the electronic tag.

### (Advantageous Effect)

According to the present disclosure, it is possible to provide a tire with an electronic tag that is protected from external stimuli.

### BRIEF DESCRIPTION OF THE DRAWINGS

In the accompanying drawings:
FIG. 1 is a perspective view of a tire according to the first embodiment;
FIG. 2 is a cross-sectional view, intersecting the circumferential direction, of the tire in the first embodiment, at the part that includes the electronic tag;
FIG. 3 is a front view of the electronic tag;
FIG. 4 is a side view of the electronic tag;
FIG. 5 is an enlarged cross-sectional view of the area including the surroundings of the electronic tag in the cross-sectional view illustrated in Figure 2;
FIG. 6 is an enlarged view of the area including the surroundings of a cover in the perspective view illustrated in Figure 1;
FIG. 7 is a schematic drawing describing the relative positions of the cover and the electronic tag;
FIG. 8 is an enlarged cross-sectional view of the area including the surroundings of the electronic tag of the tire according to the second embodiment;
FIG. 9 is a schematic drawing describing the state in which the cover covers the electronic tag in the tire according to the second embodiment; and
FIG. 10 is a drawing to describe other possible arrangements of the electronic tags.

### DETAILED DESCRIPTION

A tire according to an embodiment of the present disclosure will be described with reference to the drawings.

### (First embodiment)

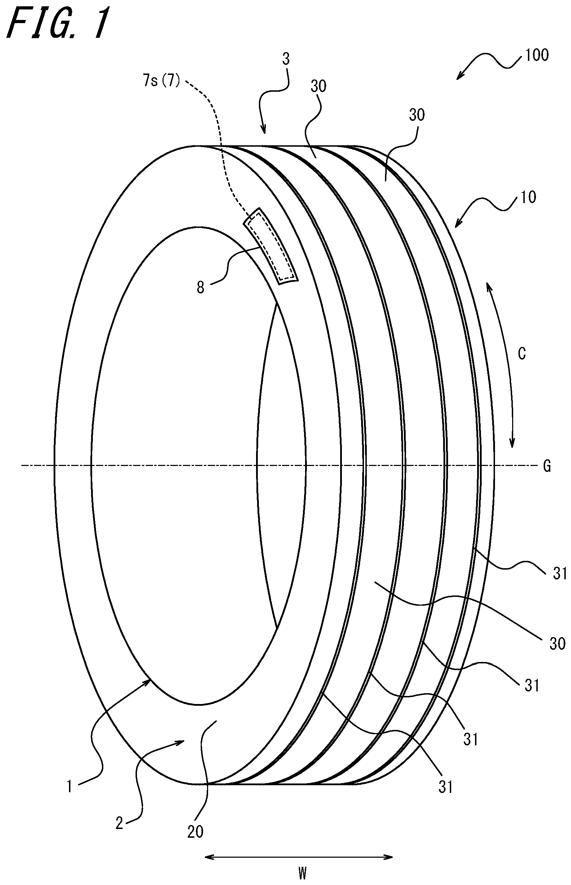

Figure 1 illustrates a side view of the tire 100 according to this embodiment.

The tire 100 is formed into a roughly circular ring shape around the axial center G. In Figure 1, the width direction of the tire 100 is indicated by direction W. The circumferential direction of the tire 100 is indicated by direction C.

In the following explanation, the direction that is the same as the width direction of the tire 100 is simply referred to as the width direction. In the following explanation, the direction along the axial center G (axial direction) is the same as the width direction.

In addition, in the following explanation, the direction that is the same as the circumferential direction of the tire 100 is simply referred to as the circumferential direction.

First, an overview of the tire 100 will be described. The tire 100 comprises a tire body 10 formed of rubber, an electronic tag 7 arranged in a sidewall portion 2 of the tire body 10, and a cover 8 arranged on an outer surface 20 of the sidewall portion 2 in the width direction of the tire body 10. When the sidewall portion 2 is viewed from the outer side along the width direction, the cover 8 covers the electronic tag 7. The elastic modulus of the cover 8 is smaller than that of the rubber in the sidewall portion 2.

In the tire 100, the electronic tag 7 is protected against stimuli from outside the tire.

The tire 100 will be described in detail below.

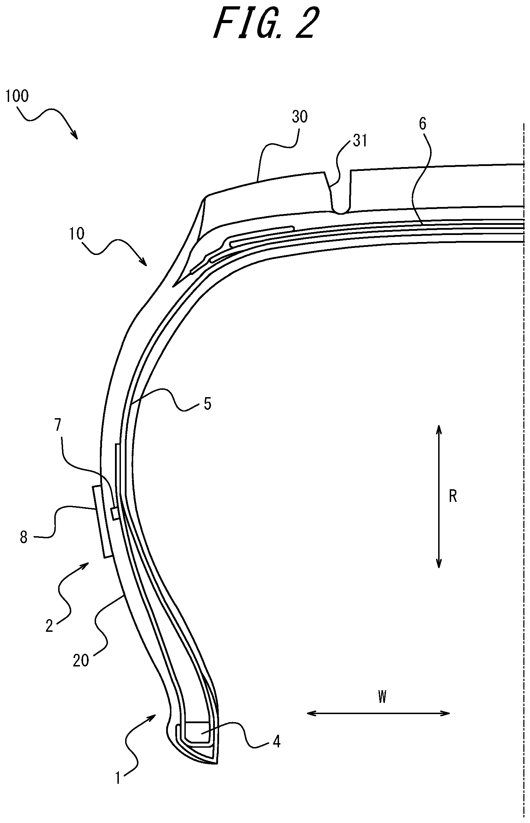

Figure 2 is a cross-sectional view, intersecting the circumferential direction, of the tire 100 at the part that includes the electronic tag 7 and the cover 8. In Figure 2, the radial direction of the tire 100 is indicated by direction R. The tire 100 is a so-called a pneumatic tire.

As illustrated in Figures 1 and 2, the tire body 10 comprises a bead portion 1 that is arranged on the side portion of the tire body 10 and secures the tire 100 to the rim, a sidewall portion 2 that is a side portion of the tire body 10, a tread portion 3 that is an outer peripheral portion of the tire body 10 on the outer side in the radial direction and contacts the road surface, and an electronic tag 7 and a cover 8 arranged on the sidewall portion 2.

The tire body 10 has a carcass 5 which is a cord layer that forms a skeleton of the tire body 10, a bead core 4 that forms an internal framework of the bead portion 1 and supports the carcass 5, and a belt 6 that is a reinforcing band provided circumferentially between the surface of the tread portion 3 and the carcass 5.

The bead portion 1, the sidewall portion 2, and the tread portion 3 each contain rubber. The rubber in the bead portion 1 and the sidewall portion 2 is referred to as side rubber. The rubber in the tread portion 3 is referred to as tread rubber.

The bead core 4, the carcass 5 and the belt 6 are embedded in the side rubber and the tread rubber.

In the tire body 10, the outer ends of the sidewall portion 2 are integrally connected to both ends of the tread portion 3 in the width direction. The bead portion 1 is integrally connected to the inner side in the radial direction of the sidewall portion 2. In other words, the cross-section, intersecting the circumferential direction, of the tire body 10 is in the shape of the letter C.

In the following description, when simply described as "surface", this refers to the surface on the outer side of the C-shaped arc of the tire body 10. For example, the surface of the tread portion 3 is the surface on the outer side of the C-shaped arc of the tire body 10, and is the surface of the tread portion 3.

As illustrated in Figures 1 and 2, the tread portion 3 has a tread pattern formed thereon, and it has a plurality of convex portions 30 (an example of a tread surface) whose outer peripheral surface contacts the road surface; and a plurality of concave portions 31 that are concave to the inner side in the radial direction relative to the convex portions 30. For example, the concave portion 31 is a circumferential groove. The outer peripheral surface is the surface on the outer side of the tread portion 3 in the tire 100.

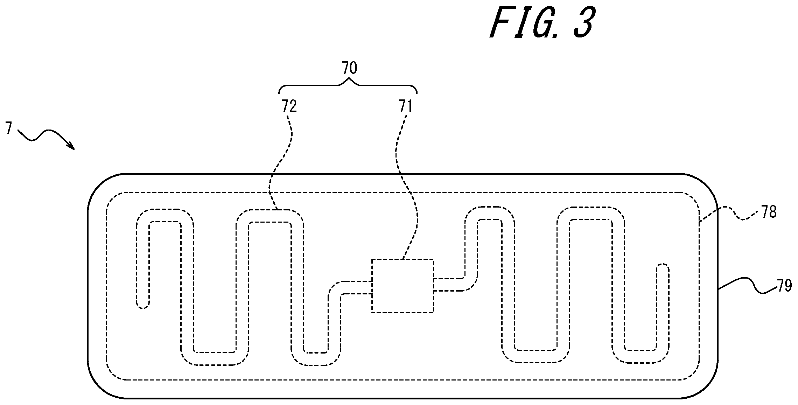

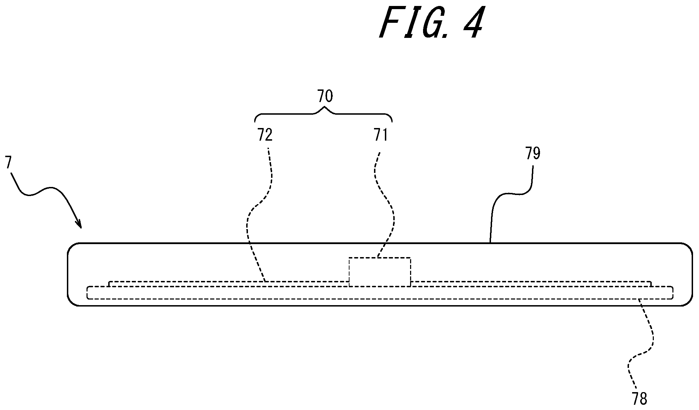

The electronic tag 7 is a small electronic circuit with a transmission/reception function and a memory function, as illustrated in Figures 3 and 4. Figure 3 illustrates the electronic tag 7 as seen from the front. Figure 4 illustrates the electronic tag 7 as seen from the side. The electronic tag 7 is, for example, in the form of a rectangular sheet when viewed from the front. The electronic tag 7 may be arranged in the side rubber so that the sheet surface of the rectangular sheet is aligned with (parallel to) the surface of the sidewall portion 2.

Examples of the electronic tag 7 include a device called an electronic tag, an IC tag, an RF tag, or an RFID tag. The electronic tag 7 has an inlet 70 that realizes a transmission/reception function and a memory function. The inlet 70 can include, for example, a semiconductor circuit 71 such as an IC chip and an antenna circuit 72 connected to this circuit as an internal circuit. The electronic tag 7 may have a film-like substrate 78 on which these inlets 70 are arranged, and a covering material 79 that covers and protects these inlets 70 and the substrate 78. The substrate 78 may be, for example, a polyimide film. The covering material 79 may be a rubber-like material, such as silicone rubber.

Information about the tire 100 may be recorded in the electronic tag 7. The electronic tag 7 may communicate with an external terminal such as a reader for the electronic tag 7, and may send the recorded information about the tire 100 to the external terminal. In addition, the electronic tag 7 may record new information received from the external terminal. Examples of the information related to the tire 100 include the tire 100 model, information related to distribution and sales, usage history and repair history, and information necessary for recycling or disposing of the tire 100 (for example, information on the constituent materials of tire 100). In other words, the electronic tag 7 in this embodiment can be a device that realizes contactless information recording and reading, which can write or read information related to the tire 100 using radio waves.

As illustrated in Figure 2, in the tire 100, the electronic tag 7 may be embedded in any of the components of the tire body 10. According to this configuration, the load applied on the electronic tag 7 can be reduced compared to when the electronic tag 7 is arranged by being sandwiched between the plurality of components that constitute the tire body 10. This improves the durability of the electronic tag 7.

It is preferable that the electronic tag 7 is not arranged at a position that is on the boundary between components with different rigidity in the direction of periphery length, which is the direction along the outer surface of the tire in a cross-sectional view along the circumferential direction (a cross-sectional view in the width direction). According to this configuration, the electronic tag 7 is not arranged at a position where strain is likely to be concentrated based on the rigidity step. Therefore, the load applied on the electronic tag 7 is reduced. This improves the durability of the electronic tag 7. In this example, it is preferable that the electronic tag 7 is not arranged at a position that is on the boundary between the end portion of the carcass 5 and the component (e.g. side rubber, etc.) adjacent to the end portion of the carcass 5, for example, in a cross-sectional view along the circumferential direction.

The number of the electronic tags 7 is not particularly limited. The tire 100 may comprise only one electronic tag 7, or it may comprise two or more electronic tags 7.

The electronic tag 7 may be arranged in the sidewall portion 2, for example. The electronic tag 7 may be arranged in the sidewall portion 2 on one side that is close to the external terminal that can communicate with the electronic tag 7, for example. In this way, the communication performance between the electronic tag 7 and the external terminal can be improved.

It is preferable that the electronic tag 7 is arranged on the inner side in the radial direction from a position where the tire 100 has the maximum width, and on the outer side in the radial direction from the bead core 4 in the bead portion 1. According to this configuration, the durability of the electronic tag 7 can be improved, and the communication between the electronic tag 7 and the external terminal is less likely to be disturbed by the bead core 4, so the communication performance of the electronic tag 7 can be improved.

In addition, when the side rubber is composed of a plurality of rubber components of the same or different types that are adjacent in the radial direction, the electronic tag 7 may be arranged by being sandwiched between the plurality of rubber components that constitute the side rubber.

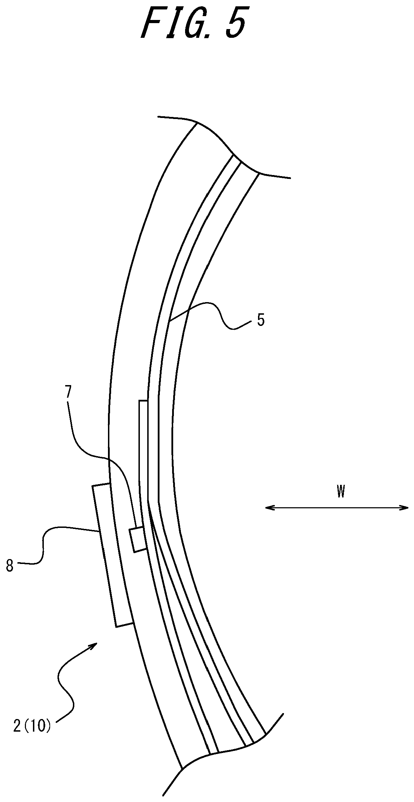

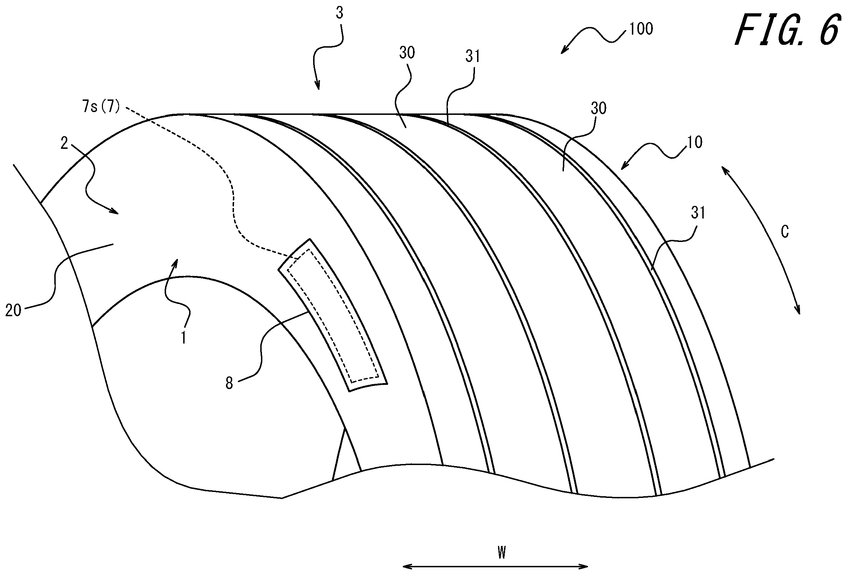

Figure 5 illustrates an enlarged cross-sectional view of the area of the sidewall portion 2, including the surroundings of the electronic tag 7 in a cross-sectional view illustrated in Figure 2. Figure 6 illustrates an enlarged view of the area of the sidewall portion 2, including the surroundings of the cover 8 in the perspective view illustrated in Figure 1.

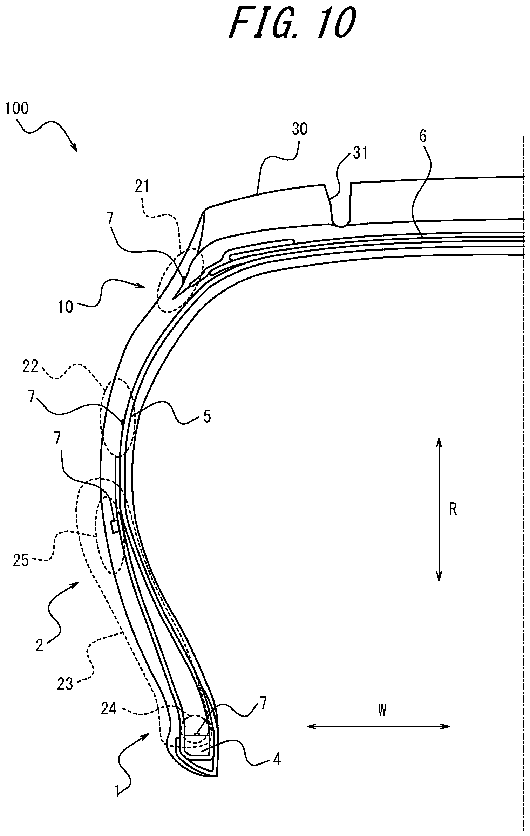

Figures 5 and 6 illustrates an example in which the electronic tag 7 is arranged, in one sidewall portion 2, on the inner side in the radial direction from the position where the tire 100 has the maximum width and on the outer side in the radial direction from the bead core 4 in the bead portion 1 (see Figure 2), and is arranged in the thickness section of the side rubber (on the inner side from the surface) and on the outer side of the carcass 5 (see Figure 5) in the width direction (in the area 25 illustrated in Figure 10). In other words, the electronic tag 7 is embedded (arranged) in the side rubber of the sidewall portion 2 of the tire body 10. It will be noted that the "outer side in the width direction" is the same side as the side of the sidewall portion 2 when viewed from the tread portion 3 (see Figure 6).

The cover 8 is a member in the form of a thin plate (of a sheet or a film) that protects the electronic tag 7 from external stimuli so that the electronic tag 7 is not damaged. The cover 8 may be formed of rubber, for example. This may improve the adhesiveness between the cover 8 and the side rubber. The cover 8 may be formed in advance into a plate shape.

The cover 8 is arranged in the same position in the radial direction and the circumferential direction as the electronic tag 7 on the surface of the sidewall portion 2. The cover 8 may be attached and fixed to the surface of the sidewall portion 2 by an adhesive or the like.

As illustrated in Figures 5 and 6, in the tire 100, when viewed from the outer side along the width direction, the cover 8 covers the electronic tag 7.

In the case of the tire 100 in this embodiment, when viewed perpendicularly to the surface of the sidewall portion 2, the electronic tag 7 is completely hidden by the cover 8.

In other words, the orthographic image 7s of the electronic tag 7 (see Figure 6), which shows the shape of the electronic tag 7 projected perpendicularly onto the surface of the sidewall portion 2, is positioned within the area of the surface of the sidewall portion 2 to which the cover 8 is attached.

In this way, the cover 8 covers the electronic tag 7 , thereby protecting the electronic tag 7 from stimuli from outside the tire 100 . Examples of the external stimuli to the tire 100 from the outside include: contact or collision of an uneven surface or road, such as a curb, on the tire 100; collision with flying objects such as stones that have been thrown by other vehicles, etc.; external forces (particularly lateral forces) applied due to collisions or contact with other vehicles in the event of a traffic accident; heat from temperature and sunlight, dirt such as soil, mud or sand (especially oil- or tar-containing mud or sand, so-called oil sand or tar sand), and deterioration associated with these forces, heat, and dirt.

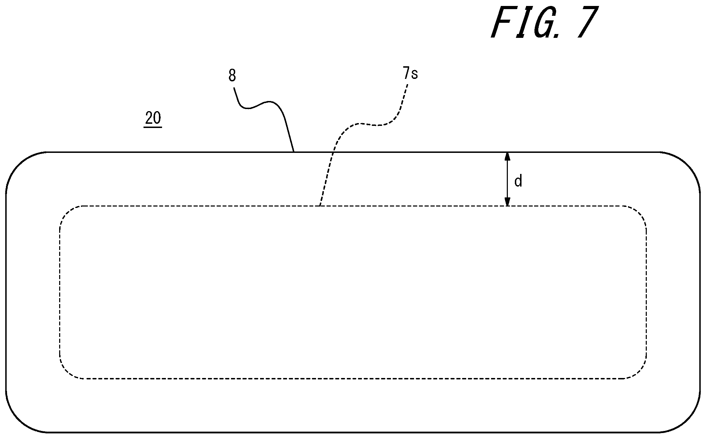

Figure 7 illustrates the relative positions of the cover 8 and the electronic tag 7. Figure 7 illustrates the cover 8 as seen from the front. As illustrated in Figures 6 and 7, it is desirable for the cover 8 to cover an area that is at least 2 mm wider than the outer circumference of the orthographic image 7s of the electronic tag 7 (the distance d between the outer circumference of the orthographic image 7s and the outer circumference of the cover 8 illustrated in Figure 7 is at least 2 mm). It is even preferable that the cover 8 covers an area that is at least 5 mm wider than the outer circumference of the orthographic image 7s of the electronic tag 7. This makes it possible to more securely protect the electronic tag 7. The cover 8 can sufficiently protect the electronic tag 7 if it covers an area 15 mm wider than the outer circumference of the orthographic image 7s of the electronic tag 7. In other words, when the cover 8 covers an area within 15 mm from the outer circumference of the orthographic image 7s of the electronic tag 7, the electronic tag 7 will be sufficiently protected.

The color of the surface of the cover 8 is preferably made to be different from the color of the surface of the sidewall portion 2. This makes it easy for the user of the device that communicates with the electronic tag 7 to understand where the electronic tag 7 is arranged on the sidewall portion 2.

The cover 8 may be formed from a material colored with a different color from other parts of the sidewall portion 2, for example.

In addition, the surface of the cover 8 may be colored differently from other parts of the sidewall portion 2 by applying a coloring agent, etc.

In addition, the surface of the cover 8 may be treated or processed to produce a color different from that of other parts of the sidewall portion 2,

It will be noted that the "color of the cover 8 is made to be different from the color of the surface of the sidewall portion 2" means that there is a difference that can be perceived by sight, such as in color, tone, brightness, pattern, or gloss, in other words, that it has visual distinguishability. In addition, the concept of making the color of the cover 8 different from the color of the sidewall portion 2 also includes cases where the cover 8 has a surface treatment that makes it luminescent or glow-in-the-dark.

In the case where the color of the cover 8 is made to be different from the color of the sidewall portion 2, and in particular, where the hue, brightness or saturation is different, the difference in color may be evaluated using a spectrophotometer or a colorimeter. One example of the spectrophotometer or the colorimeter that can be used to evaluate color differences like this is the Handy-type Spectrophotometer (Model: NF333) from Nippon Denshoku Kogyo Co.

When the color of the cover 8 is made to be different from the color of the sidewall portion 2, it is better if the difference in color when viewed in terms of color difference (based on the color difference formula ΔE*^{,} CIE DE2000) is 10 or more. This makes the cover 8 more distinctive. In this case, the color difference in this embodiment is based on the values measured using the handheld spectrophotometer (model: NF333) described above.

In addition to making the position and range of the cover 8 distinguishable by sight by making the cover 8 a different color from the other parts of the sidewall portion 2, the color may also be used to indicate the embedding depth of the electronic tag 7 from the surface of the sidewall portion 2. For example, when the cover 8 is yellow, the embedding depth is 1mm or more and less than 5mm from the surface, and when the cover 8 is blue, it is 5mm or more and less than 15mm from the surface. This makes it easier to separate the rubber material from the electronic tag 7 when disposing of or recycling the tire 100.

The cover 8 may indicate the embedding depth of the electronic tag 7 by its shape, as well as by its color. For example, when the cover 8 has a rectangular shape with four sharp corners, the embedding depth of the electronic tag 7 is 1mm or more and less than 5mm from the surface, and when the cover 8 has a rectangular shape with four chamfered corners, the embedding depth is 5mm or more and less than 15mm from the surface.

The surface of the cover 8 may be mirror-like surface with high light reflectance. This may prevent the deterioration of the cover 8 due to ultraviolet rays from sunlight and the failure of the electronic tag 7 due to heat generation from infrared rays.

The elastic modulus of the cover 8 may be equivalent to that of the side rubber (e.g. 3.5 MPa or more, 5.0 MPa or less). This allows the cover 8 to deform in accordance with the deformation of the sidewall portion 2, and prevents the cover 8 from peeling off the sidewall portion 2.

The elastic modulus (Young's modulus) of the cover 8 is preferably smaller than that of the side rubber. This makes it easier for the cover 8 to follow the deformation of the sidewall portion 2 caused by external stimuli, and better prevents the cover 8 from peeling off from the sidewall portion 2.

The elastic modulus of the cover 8 is 90% or more and 110% or less of the elastic modulus of the side rubber, and preferably 90% or more and less than 100% of the same. It is 90% or more and 110% or less of the elastic modulus of the side rubber, and preferably 90% or more and less than 100% of the same. It will be noted that for the elastic modulus in this embodiment, the value measured in accordance with JIS K 6394 is used. In addition, the elastic modulus in this embodiment is the storage modulus, which is measured under the following conditions: initial load of 1600 g, dynamic strain of ±4%, frequency of 52 Hz, and temperature of 25°C.

The elastic modulus of the cover 8 is preferably smaller than that of the covering material 79 of the electronic tag 7 (see Figures 3 and 4). This makes the cover 8 more deformable than the electronic tag 7, and the force applied to the electronic tag 7 due to deformation of the sidewall portion 2 caused by external stimuli is reduced.

The elastic modulus of the covering material 79 of the electronic tag 7 (see Figures 3 and 4) is preferably greater than that of the side rubber. The elastic modulus of the covering material 79 is, for example, 8.0 MPa or more and 9.5 MPa or less. In this way, the side rubber around the electronic tag 7 absorbs the force caused by the deformation of the sidewall portion 2 due to external stimuli, so the force caused by the deformation of the sidewall portion 2 is less likely to be applied to the electronic tag 7.

For the elastic modulus of the cover 8 and the covering material 79 of the electronic tag 7, as with the side rubber, the value measured in accordance with JIS K 6394 is used.

The cover 8 preferably contains fibrous material in the rubber. This makes the cover 8 more durable. For example, the cover 8 is less likely to tear or rip. This ensures the protection for the electronic tag 7.

The fibrous materials that can be included in the cover 8 include, for example, organic fibers and metal fibers (metal wire materials) such as steel.

The fibrous material that can be included in the cover 8 is preferably an organic fiber. When the fibrous material that can be included in the cover 8 is an organic fiber, it will be easier to dispose of or recycle the tire 100 because there will be no need to separate the metal fibers from the cover 8 when disposing of or recycling the tire 100. It also makes it easier to manufacture and shape the cover 8. In addition, the organic fiber does not interfere with the communication of the electronic tag 7.

Example of the organic fibers that can be included in the cover 8 include nylon, polyester, and polyamide fibers. Other fibers may be used as the fibrous material.

The fiber diameter of the organic fiber is preferably 0.4 mm or larger and 0.8 mm or smaller. By keeping the fiber diameter of the organic fiber within this range, the cover 8 can be made strong enough to provide sufficient protection for the electronic tag 7.

In addition, when using conductive metallic fibers as the fibrous material to be included in the cover 8, it may be possible to improve the antenna performance of the electronic tag 7. If improved antenna performance of the electronic tag 7 is desired, for example, it is preferable to arrange the adjacent metal fibers in parallel within the cover 8.

The surface of the cover 8 is preferably made to have a different smoothness compared to the surface of the sidewall portion 2. As described below, this makes it harder for dirt to adhere to the cover 8 and also easier for dirt to come off from the cover 8.

The surface of the cover 8 is preferably made to have a higher smoothness than the surface of the sidewall portion 2. In other words, the surface of the cover 8 is preferably made with a lower surface roughness than the surface of the sidewall portion 2. This makes it harder for dirt such as soil, mud or sand to adhere to the surface of the cover 8. Also, even if soil, mud or sand adheres to the surface of the cover 8, this makes it easier for the soil, mud or sand to peel off from the cover 8 (the dirt will come off more easily). Furthermore, by making it harder for dirt to adhere to the cover 8 and easier for dirt to come off from the cover 8, it is possible to prevents the oil from the dirt from causing the rubber in the cover 8 and the sidewall portion 2, or the covering material 79 of the electronic tag 7 to swell and deteriorate, thereby reducing the protection for the electronic tag 7 or causing a malfunction (i.e. failure or damage) of the electronic tag 7.

In addition, the surface of the cover 8 may be made to have a lower smoothness (with a rougher surface) than the surface of the sidewall portion 2. This makes it harder for dirt to adhere to the cover 8, and also makes it easier for dirt to come off from the cover 8, as with the case where the surface of the cover 8 is made to have a higher smoothness than the surface of the sidewall portion 2.

When the arithmetic mean roughness of the surface of the sidewall portion 2 is 10 µm or more and 60 µm or less, the relationship between the smoothness of the surface of the cover 8, and the ease of adhesion or peeling off of mud, etc., is as follows, for example. That is, when the arithmetic mean roughness (so-called Ra) of the surface of the cover 8 is 6 µm or less, it will be hard for sticky mud (for example, with a particle size of 6 µm or more and 50 µm or less) to adhere, and easy to peel off. In the same way, when the arithmetic mean roughness of the surface of the cover 8 is 80 µm or more, it will be hard for sticky mud to adhere, and easy to peel off. It will be noted that for the arithmetic mean roughness of the sidewall portion 2 and the surface of the cover 8, values measured in accordance with ISO 25178 are used. Arithmetic mean roughness can be measured using commercially available surface texture measuring instruments (e.g., laser microscopes for shape analysis or 3D shape measuring instruments). The measurement method may be either a contact method or a non-contact method.

The surface of the cover 8 is preferably processed so that its surface tension is lower than that of the sidewall portion 2. For example, a water-repellent coating may be formed on the surface of the cover 8. This makes it harder for dirt such as mud to adhere to the surface of the cover 8, and also makes it easier for dirt to come off from the cover 8. Therefore, so as above, it is possible to prevent the protection for the electronic tag 7 from being reduced or the function from being impaired.

In order to increase the water repellency of the surface of the cover 8, it is preferable to include a hydrophobic substance in the cover 8, or to include water repellency agent such as fluororesin, silane compounds, and silicone oil. In addition, in order to increase the water repellency of the surface of the cover 8, a film containing fluororesin, silane compounds, and silicone oil may be formed on the surface of the cover 8.

In addition, it may be possible to prevent dirt from adhering to the cover 8 by increasing the hydrophilicity of the surface of the cover 8. In order to increase the hydrophilicity of the surface of the cover 8, for example, the cover 8 may contain a hydrophilic substance (a substance having a hydrophilic group such as a hydroxyl group) such as cellulose. As a result, even if mud, which has a high water content among other types of dirt, adheres to the surface of the cover 8, the adhered mud may be easily removed from the tires, etc.

The surface of the cover 8 may be treated to be oil resistant. For example, an oil-resistant coating may be formed on the surface of the cover 8. In this way, as described above, it is possible to prevent the protection for the electronic tag 7 from being reduced or the function from being impaired.

It is preferable that the back surface of the cover 8 (the side facing the sidewall portion 2, in other words, the adhesion surface to the sidewall portion 2) is made to have a rougher surface (having a higher surface roughness) than the front surface of the cover 8. Also, it is more preferable that the back surface of the cover 8 is made to have a rougher surface than the surface of the sidewall portion 2. By making the back surface of the cover 8 rougher, the adhesiveness when attaching the cover 8 to the sidewall portion 2 may be improved. For example, the adhesiveness and adhesive strength may be improved when using an adhesive to attach the cover 8 to the sidewall portion 2. This ensures the protection for the electronic tag 7. The arithmetic mean roughness of the back surface of the cover 8 is preferably in the range of 10 µm or more to 50 µm or less. Also, for the arithmetic mean roughness of the back surface of the cover 8, the value measured in accordance with ISO 25178 is used, in the same way as the arithmetic mean roughness of the surface of the sidewall portion 2 and the surface of the cover 8.

### (Second embodiment)

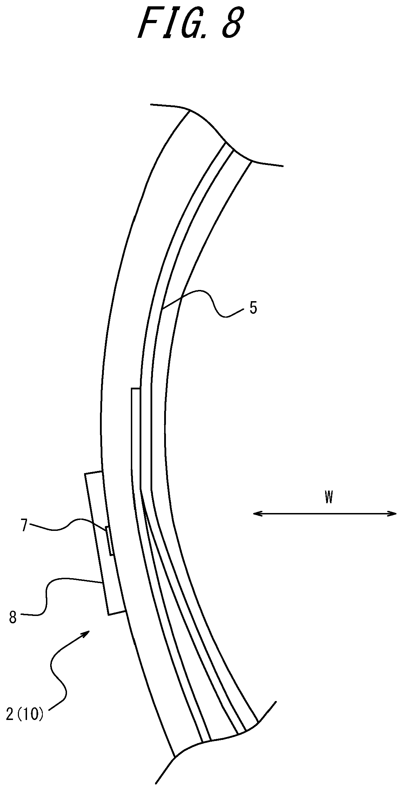

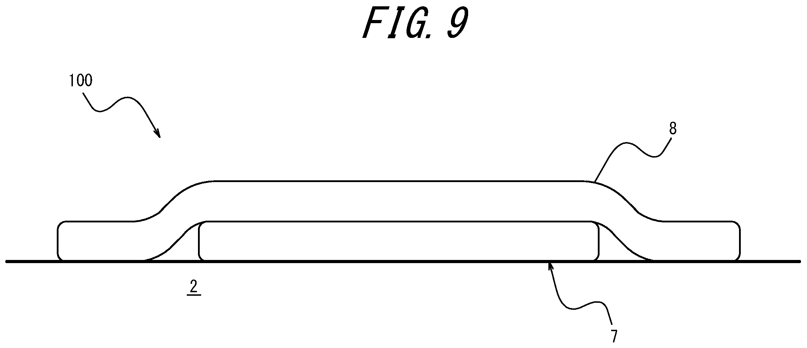

In the first embodiment, a case where the electronic tag 7 is embedded (arranged) in the side rubber of the sidewall portion 2 of the tire body 10 was described. The second embodiment is different from the first embodiment in that, as illustrated in Figures 8 and 9, the electronic tag 7 is arranged between the cover 8 and the sidewall portion 2 of the tire 100, and is the same as the first embodiment in other respects. The following explanation details the differences from the first embodiment, and omits explanations of points that are the same as the first embodiment as appropriate.

Figure 8 illustrates an enlarged cross-sectional view of the area of the sidewall portion 2, including the surroundings of the electronic tag 7, which is depicted in the same way as Figure 5. Figure 9 also illustrates a schematic drawing to explain the state of the cover 8 and the electronic tag 7 viewed from an outer surface direction of the cover 8, with the cover 8 covering the electronic tag 7.

As illustrated in Figures 8 and 9, in the tire 100 of the present embodiment, the electronic tag 7 is arranged between the cover 8 and the sidewall portion 2, as illustrated in Figure 8. In other words, the electronic tag 7 is attached and fixed to the surface of the sidewall portion 2 with an adhesive or the like. The cover 8 may be fixed to the surface of sidewall portion 2 so as to cover the entire surface of the electronic tag 7 arranged on the surface of the sidewall portion 2.

By arranging the electronic tag 7 between the cover 8 and the sidewall portion 2 in this way, it is possible to improve the communication performance between the electronic tag 7 and the external terminal. In addition, it will be easier to separate the rubber material from the electronic tag when disposing of or recycling the tire 100. It will also be easier to attach (mount) the electronic tag 7 to the sidewall portion 2.

As described above, a tire can be provided in which the electronic tag is protected against external stimuli.

### [Other embodiments]

(1) In the above embodiment, the case where the cover 8 is a member in the form of a thin plate (of a sheet or a film), the cover 8 may be formed in advance into the form of a plate, and the cover 8 may be attached and fixed to the surface of the sidewall portion 2 using an adhesive or the like, was explained. However, the cover 8 is not necessary to being formed in advance into the form of a plate. The cover 8 may be formed by applying a liquid (liquid-like) material (e.g., rubber dissolved in a solvent or made into an emulsion) to the surface of the sidewall portion 2.
(2) In the above embodiment, the case where the cover 8 is in the form of a thin plate was explained, and in Figures 5 and 9, the cover 8 is depicted as a single layer. However, the cover 8 may be a laminate of a plurality of layers.
(3) In the above embodiment, as illustrated in Figures 5 and 8, the case where the electronic tag 7 is arranged on the inner side in the radial direction from the position where the tire 100 has the maximum width and on the outer side in the radial direction from the bead core 4 in the bead portion 1 (see Figure 2), and is arranged in the thickness section of the side rubber (on the inner side from the surface) and on the outer side of the carcass 5 (see Figure 5) in the width direction (in the area 25 illustrated in Figure 10). However, the arrangement of the electronic tag 7 is not limited to this. In Figure 10, the illustration of the cover 8 is omitted.

As another example, the electronic tag 7 may be arranged between the carcass 5 and the side rubber, or between the tread rubber and the side rubber (for example, at the position 21 illustrated in Figure 10).

In addition, the electronic tag 7 may be arranged between the position where the tire 100 has the maximum width and the position on the surface of the tread portion 3 (tread surface) in the radial direction (for example, at the position 22 illustrated in Figure 10). In this way, compared to a configuration in which the electronic tag 7 is arranged on the inner side in the radial direction from the position where the tire 100 has the maximum width, it is possible to improve the communication performance with the electronic tag 7 from the outer side of the tire 100 in the radial direction.

In addition, the electronic tag 7 may be arranged on the inner side from the position where the tire 100 has the maximum width in the radial direction (for example, in the area 23 illustrated in Figure 10). In this way, the electronic tag 7 is arranged near the highly rigid bead portion 1. This reduces the load applied on the electronic tag 7, thereby improving the durability of the electronic tag 7. More specifically, the electronic tag 7 may be arranged in a position adjacent to the bead core 4 in the radial or width direction (e.g., in the area 24 illustrated in FIG. 10). The area around the bead core 4 is not prone to strain concentration. This reduces the load applied on the electronic tag 7, thereby improving the durability of the electronic tag 7. It will be noted that, in the example illustrated in Figure 10, the area 23 includes the areas 24 and 25.

Even when the electronic tag 7 is arranged in each of the areas described above, it is sufficient if the cover 8 covers the electronic tags 7 when viewed from the outer side along the width direction of the sidewall portion 2.

It will be noted that the configuration disclosed in the above embodiment (including alternative embodiments, hereinafter the same) can be combined and applied with the configuration disclosed in other embodiments, as long as there is no contradiction. In addition, the embodiments disclosed herein are examples, and the embodiments of this disclosure are not limited to these examples, and can be modified as appropriate within the scope of not deviating from the purpose of this disclosure.

### INDUSTRIAL APPLICABILITY

This disclosure can be applied to tires.

### REFERENCE SIGNS LIST

- 1: Bead portion
- 10: Tire body
- 100: Tire
- 2: Sidewall portion
- 20: Outer surface
- 21: Position
- 22: Position
- 23: Area
- 24: Area
- 25: Area
- 3: Tread portion
- 30: Convex portion
- 31: Concave portion
- 4: Bead core
- 5: Carcass
- 6: Belt
- 7: Electronic tag
- 70: Inlet
- 71: Semiconductor circuit
- 72: Antenna circuit
- 78: Base plate
- 79: Covering material
- 7s:: Orthographic image
- 8:: Cover
- C:: Direction
- D:: Distance
- G:: Axis
- R:: Direction
- W:: Direction

## Claims

1. A tire comprising:
a tire body formed of rubber;
an electronic tag arranged in a sidewall portion of the tire body; and
a cover arranged on an outer surface of the sidewall portion in a width direction of the tire body, wherein
when viewed from an outer side along the width direction, the cover covers the electronic tag.

2. The tire as described in claim 1, wherein elastic modulus of the cover is smaller than elastic modulus of side rubber of the sidewall portion.

3. The tire as described in claim 1, wherein the electronic tag has a rubber-like covering material that covers an internal circuit, and
elastic modulus of the cover is smaller than elastic modulus of the covering material.

4. The tire as described in claim 1, wherein color of a surface of the cover is different from color of the sidewall portion.

5. The tire as described in claim 1, wherein the electronic tag is arranged between the cover and the sidewall portion.

6. The tire as described in any one of claims 1 to 5, wherein the cover contains fibrous materials.

7. The tire as described in any one of claims 1 to 5, wherein a back surface of the cover has a rougher surface than the outer surface of the sidewall portion.
